# EUROPEAN PATENT APPLICATION

(11) **EP 4 804 031 A1**
(43) Date of publication of application: **09.09.2026**
(21) Application number: 26160958.0
(22) Date of filing: 26.02.2026
(51) Int. Cl.: G06F 11/07, G06F 11/20

(54) **USING SPARE CORES FOR MITIGATION OF HARDWARE PROBLEMS**

(30) Priority: 07.03.2025 US 202519073772
(71) Applicant: Microsoft Technology Licensing, LLC, Redmond, WA 98052 (US)
(72) Inventor: PELLEGRINI, Andrea, Redmond, 98052 (US); BACHAND, Derek Todd, Redmond, 98052 (US); GUPTA, Prateek Kumar, Redmond, 98052 (US); JUSTIN, Ajit, Redmond, 98052 (US); MOGA, Adrian Corneliu, Redmond, 98052 (US); PINGILI, Sudeesh Reddy, Redmond, 98052 (US)
(74) Representative: CMS Cameron McKenna Nabarro Olswang LLP

(57) **Abstract**

This document relates to utilizing spare cores to mitigate hardware failures on a computing device. For instance, in some cases, tenant workloads can have sensitive data that executes on a given core of a device. In some cases, a hardware fault in the system may occur that affects the core running the tenant workload, and there may be an action that can be taken in mitigation software or firmware to fix that hardware fault. However, because of the sensitivity of the data on the core experiencing the fault, it is not always possible to run the mitigation algorithms on the core that is affected by the fault. The disclosed implementations can utilize a spare core to execute a hardware mitigation algorithm on another core that can clear the fault, without accessing any sensitive data on the core that is affected by the fault.

## Description

### BACKGROUND

Computer hardware typically undergoes extensive testing before being deployed on a widespread basis. However, even the most thorough testing methodologies will sometimes fail to identify every failure mode of a given hardware device. Once computer hardware is deployed on a widespread basis, it can be very expensive and time-consuming to repair or replace all of the faulty hardware.

### SUMMARY

This Summary is provided to introduce a selection of concepts in a simplified form. These concepts are further described below in the Detailed Description. This Summary is not intended to identify key features or essential features of the claimed subject matter, nor is it intended to be used to limit the scope of the claimed subject matter.

The description generally relates to techniques for mitigating hardware failures. One example includes a computer-implemented method that can include executing workloads on processing cores of a system, the workloads including a first workload that executes on a first processing core of the system and a second workload that executes on a second processing core of the system. The method can also include selecting a third processing core of the system that is available to run a hardware mitigation algorithm. The method can also include executing the hardware mitigation algorithm on the third processing core. The method can also include detecting a hardware state of one or more hardware resources utilized by the first processing core and the second processing core. The method can also include comparing the detected hardware state to one or more fault criteria for initiating a hardware mitigation action. The method can also include when the detected hardware state matches the one or more fault criteria, performing the hardware mitigation action by the third processing core, where the hardware mitigation action changes state of the one or more hardware resources.

Another example entails a system that includes a processor and a storage medium storing instructions. When executed by the processor, the instructions can cause the system to execute workloads on two or more processing cores of the system, the workloads including a first workload that executes on a first processing core of the system and a second workload that executes on a second processing core of the system. The instructions can also cause the system to execute a hardware mitigation algorithm on an available third processing core. The instructions can also cause the system to detect a hardware state of one or more individual hardware resources utilized by the first processing core and the second processing core. The instructions can also cause the system to compare the detected hardware state to one or more fault criteria for initiating a hardware mitigation action. The instructions can also cause the system to, when the detected hardware state matches the one or more fault criteria, perform the hardware mitigation action by the third processing core, where the hardware mitigation action changes state of the one or more individual hardware resources.

Another example includes a computer-readable storage medium storing executable instructions which, when executed by a processor, cause the processor to perform acts. The acts can include executing workloads on processing cores of a system, the workloads including a first workload that executes on a first processing core of the system and a second workload that executes on a second processing core of the system. The acts can also include executing a hardware mitigation algorithm on a third processing core. The acts can also include detecting a hardware state of one or more hardware resources utilized by the first processing core and the second processing core. The acts can also include comparing the detected hardware state to one or more fault criteria for initiating a hardware mitigation action. The acts can also include, when the detected hardware state matches the one or more fault criteria, performing the hardware mitigation action by the third processing core, where the hardware mitigation action changes state of the one or more hardware resources.

The above-listed examples are intended to provide a quick reference to aid the reader and are not intended to define the scope of the concepts described herein.

### BRIEF DESCRIPTION OF THE DRAWINGS

The Detailed Description is described with reference to the accompanying figures. In the figures, the left-most digit(s) of a reference number identifies the figure in which the reference number first appears. The use of similar reference numbers in different instances in the description and the figures may indicate similar or identical items.
FIG. 1 illustrates an example confidential compute architecture consistent with some implementations of the present concepts.
FIG. 2 illustrates an example CPU architecture, consistent with some implementations of the present concepts.
FIGS. 3A-3C illustrate examples of assigning cores to perform respective functions in a system, consistent with some implementations of the present concepts.
FIGS. 4A-4D illustrate examples of hardware states, consistent with some implementations of the present concepts.
FIG. 5 illustrates an example of a system in which the disclosed implementations can be performed, consistent with some implementations of the present concepts.
FIG. 6 illustrates an example method or technique for implementing a hardware mitigation algorithm, consistent with some implementations of the disclosed techniques.
FIG. 7 illustrates an example graphical user interface, consistent with some implementations of the disclosed techniques.

### DETAILED DESCRIPTION

### OVERVIEW

As noted above, computer hardware problems sometimes arise despite extensive efforts to ensure otherwise. For instance, hardware manufacturers devise extensive testing schemes in an attempt to exercise every possible condition that the hardware will experience once delivered to an end user. However, the reality is that end users will sometimes place demands on the hardware that result in failure conditions that were not identified prior to delivery.

As also noted above, there are several approaches for mitigating hardware problems that arise after delivery to an end user. For instance, the hardware can be removed and sent back to the manufacturer for repair or replacement, or can be repaired onsite. While effective, these approaches are expensive and also impact availability of computing services that rely on the hardware.

In some cases, mitigation strategies can be implemented in software or firmware to address hardware defects. Software or firmware mitigation strategies can be performed at much lower cost and with much less impact on availability of computing services. This is because the faulty hardware does not necessarily need to be removed or repaired. Instead, mitigation software or firmware can be installed and executed on a given computing device, resulting in very little or no downtime for the device.

However, in some cases, it is not straightforward to install and execute mitigation software or firmware on a computing device. For instance, consider a scenario where an entity such as a cloud service provider wishes to provide confidential compute services to various tenants. This implies that the tenant's data will remain confidential, i.e., that other tenants and the cloud provider themselves will not be able to view the private data of the respective tenants. Thus, for instance, if tenant software is executing on a processing core that is affected by a hardware problem, it may not be possible for the cloud services provider to execute their own mitigation code on the same core that is experiencing the issue, because this might give the cloud services provider visibility into private data on that processing core.

The disclosed implementations can select a spare core that cannot access private tenant data, and then run mitigation code on the spare core. There are several conditions that make this possible. First, the spare core has the ability to monitor for specific failure criteria that indicate a hardware failure on other cores running tenant software, without necessarily accessing private data on those cores. Second, the spare core is capable of taking some hardware mitigation action to clear the failure state, again without necessarily accessing private data on the other cores.

### TERMINOLOGY

The term "workload" refers to an instance of software that executes on behalf of an end user. For instance, a cloud services provider might run workloads that includes tenant applications executing in virtual machines that provide guest operating systems to the tenant applications. These workloads can be managed by a hypervisor.

The term "hardware mitigation algorithm" refers to software or firmware that executes instructions on a processor core to detect and/or resolve a hardware fault. For instance, in some implementations, a spare core that is not executing a tenant workload can be selected to execute a hardware mitigation algorithm. The term "hardware state" refers to any information about hardware on a computing device. For instance, a spare core running a hardware mitigation algorithm can determine hardware state of another core by accessing a shared hardware resource, such as a snoop filter, a performance monitoring unit (PMU), etc. In many cases, the hardware state does not reveal private data being used by workloads on the other core.

The term "fault criteria" refers to one or more specific conditions that can be detected in hardware state by a hardware mitigation algorithm and that indicate some type of hardware failure or performance issue. For instance, while a hardware mitigation algorithm may not be able to access private data from a workload executing on a different core, the hardware mitigation algorithm might nevertheless be able to detect a hardware fault that affects the other core by considering hardware state of shared resources that are available to the core running the hardware mitigation algorithm.

The term "hardware mitigation action" refers to an action that can be taken by a hardware mitigation algorithm to clear or otherwise mitigate a hardware fault. For instance, a hardware mitigation action can be performed on a hardware resource accessible to a spare core in a manner that resolves a hardware fault experienced by another core that is running a workload. For instance, a hardware mitigation could clear a faulty cache state, a faulty memory state, a faulty network state, etc. In some cases, a hardware mitigation action can be taken without accessing private data on the processing core that was experiencing the hardware fault.

### EXAMPLE CONFIDENTIAL COMPUTE ARCHITECTURE

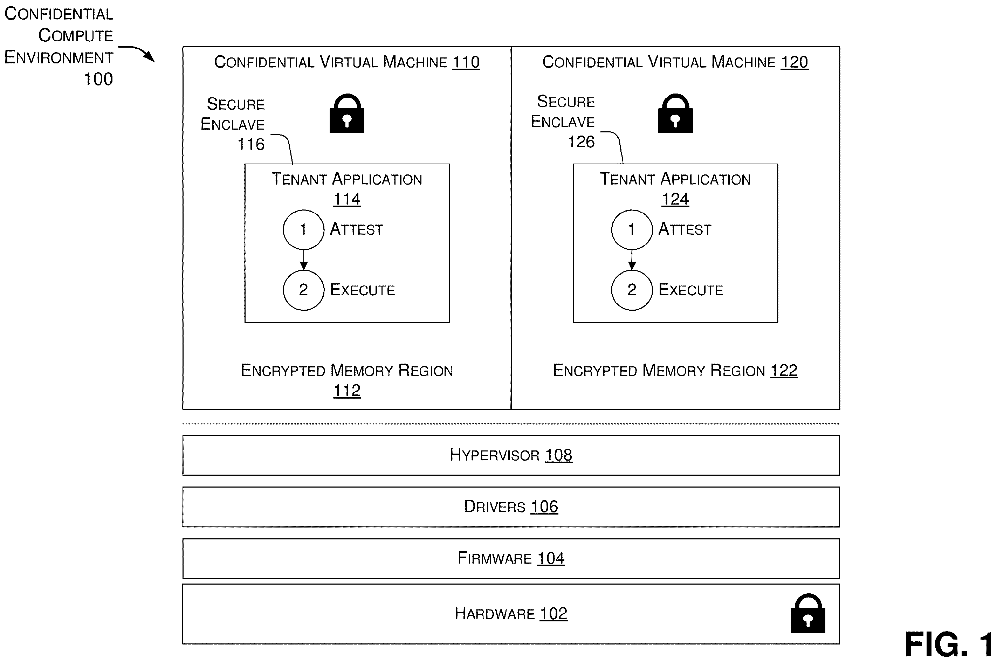

FIG. 1 shows a confidential compute environment 100 with hardware 102, such as a central processing unit, main memory, an interposer, a storage device such an SSD, I/O devices such as network adapters, input devices, output devices, etc. Firmware 104 can initialize the hardware during bootup, and after bootup can provide limited functionality such as managing a system clock or performing power management operations. For example, the firmware can be implemented using Unified Extensible Firmware Interface (UEFI) and/or Basic Input/Output System (BIOS) technologies. During bootup, firmware 104 can initialize and configure the hardware using drivers 106, and then transfer control to a hypervisor 108.

Hypervisor 108 can utilize drivers 106 to control hardware 102. Note that the hypervisor may have its own drivers that are used at runtime and are different than the drivers employed by the firmware 104. The hypervisor can be a Type 1 (e.g., "bare metal") hypervisor that runs directly on hardware 102 or can be a Type 2 (e.g., "hosted") hypervisor that executes on top of an underlying host operating system that manages the hardware.

Hypervisor 108 can provide a confidential virtual machine 110 with an encrypted memory region 112 to a tenant application 114, and a confidential virtual machine 120 with an encrypted memory region 122 to a tenant application 124. The encrypted memory regions provide for data in use encryption of sensitive data when processed by the respective tenant applications. Tenant application 114 can execute in a secure enclave 116 where the tenant application can perform an attestation process that allows the tenant application to execute on decrypted data within secure enclave 116. Likewise, tenant application 124 can execute in a secure enclave 126 where the tenant application can perform an attestation process that allows the tenant application to execute on decrypted data within secure enclave 126. In further implementations, additional confidential virtual machines are provided, each executing additional instances of tenant applications in additional secure enclaves. Secure enclaves can be implemented using technologies such as Intel^{®} Software Guard Extensions (Intel^{®} SGX), Intel Trusted Domain Extensions (Intel^{®} TDX) or AMD^{®} Secure Encrypted Virtualization (AMD^{®} SEV), ARM^{®} Trustzone, ARM^{®} Confidential Compute Architecture, Trusted Platform Modules (TPMs), etc.

Hypervisor 108 can provide virtualized hardware to confidential virtual machine 110 and confidential virtual machine 120. For instance, the hypervisor can provide virtualized CPU, virtualized memory, virtualized storage, virtualized network, etc. The virtualized hardware can be implemented using physical hardware that can potentially experience faults that can be mitigated using the techniques described herein.

### EXAMPLE CPU ARCHITECTURE

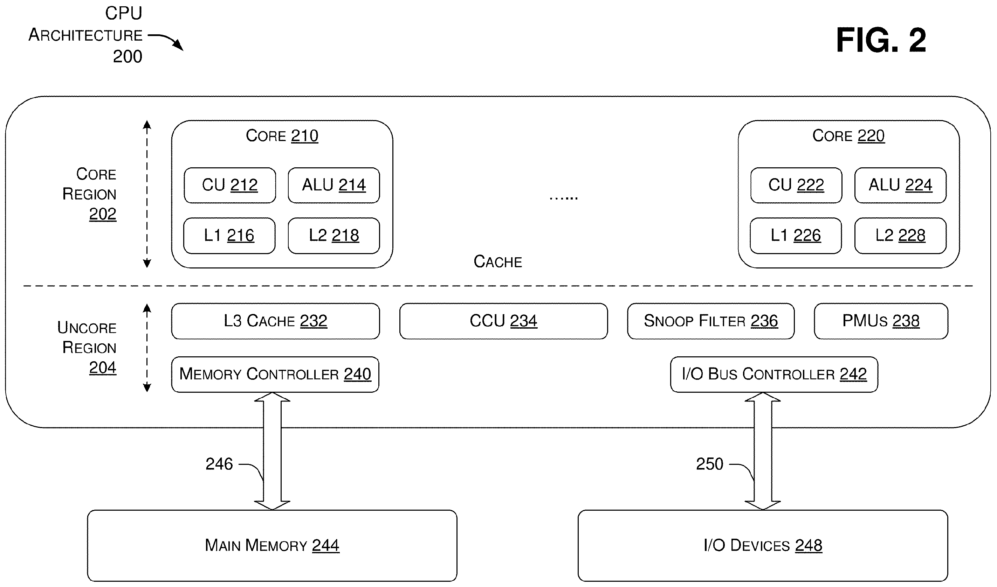

FIG. 2 shows an example CPU architecture 200 with a core region 202 and an uncore region 204. The core includes region includes core 210 and core 220. Core 210 can include a control unit or CU 212, an arithmetic logic unit or ALU 214, an L1 cache 216, and an L2 cache 218. Core 220 includes a CU 222, an ALU 224, an L1 cache 226, and an L2 cache 228. The respective CUs can be responsible for fetching instructions from memory, decoding the instructions into micro-operations, synchronizing operations within its respective core according to a system clock, managing data flow within the respective core, etc. The respective ALUs can perform arithmetic operations such as addition and subtraction, logical operations such as AND, OR, XOR, NOT, bitwise operations, shift operations, comparisons, etc. The respective L1 caches can be very fast memory, small memory regions (e.g., 16-128 kilobytes) that take only a few (e.g., 1-3) CPU clock cycles to access. The respective L2 caches can be similar to the L1 caches but can be somewhat larger (e.g., 256 kilobytes to several megabytes) and can take somewhat longer to access, e.g., 3-10 CPU clock cycles. Additional cores with additional CUs, ALUs, and L1/L2 caches can also be provided.

The uncore region 204 includes an L3 cache 232, cache coherency unit 234, snoop filter 236, performance monitor units or PMUs 238, a memory controller 240, and an I/O bus controller 242. The L3 cache serves a similar function to the L1 and L2 caches but can be much larger (e.g., 4-64 megabytes) and slower to access (10-20 CPU clock cycles). Furthermore, the L3 cache can be a shared cache that is accessible to all of the cores, whereas the L1 and L2 caches can be local caches that cannot be directly accessed by other cores. The memory controller communicates data to/from main memory 244 over memory bus 246 (double arrow toward memory) and the I/O bus controller communicates data to/from I/O devices 248 over I/O bus 250 (double arrow toward I/O devices). For instance, the memory bus can be a double data rate (DDR) memory bus and the I/O bus can be a PCIe bus.

The cache coherency unit 234 can monitor memory accesses by the respective cores. For instance, the cache coherency unit 234 can instruct cores to invalidate individual cache lines in their respective local (L1 and/or L2) caches when other cores modify data. The snoop filter 236 can be a shared hardware resource that is used for efficiently ensuring cache coherency. For instance, the snoop filter can indicate when a given cache entry in an L1 or L2 cache is shared by more than one core. The snoop filter can also indicate when one of the cores has modified a given cache line entry, whether a given cache line entry is "dirty" (e.g., has a different value than what was read from main memory), etc. While the snoop filter can be used by one core to determine some aspects of caching behavior by other cores, the snoop filter does not share the actual data used on the other cores.

The PMUs 238 can include various counters or other monitors that indicate hardware state. For instance, the PMUs can indicate the number of CPU cycles executed, the number of instructions that have been retried, cache misses, incorrect branch predictions, memory accesses, translation lookaside buffer misses, etc. Like the snoop filter, the PMUs can be used by one core to determine some aspects of hardware behavior by other cores, but the PMUs do not share the actual data used on the other cores.

### EXAMPLE CORE ASSIGNMENTS

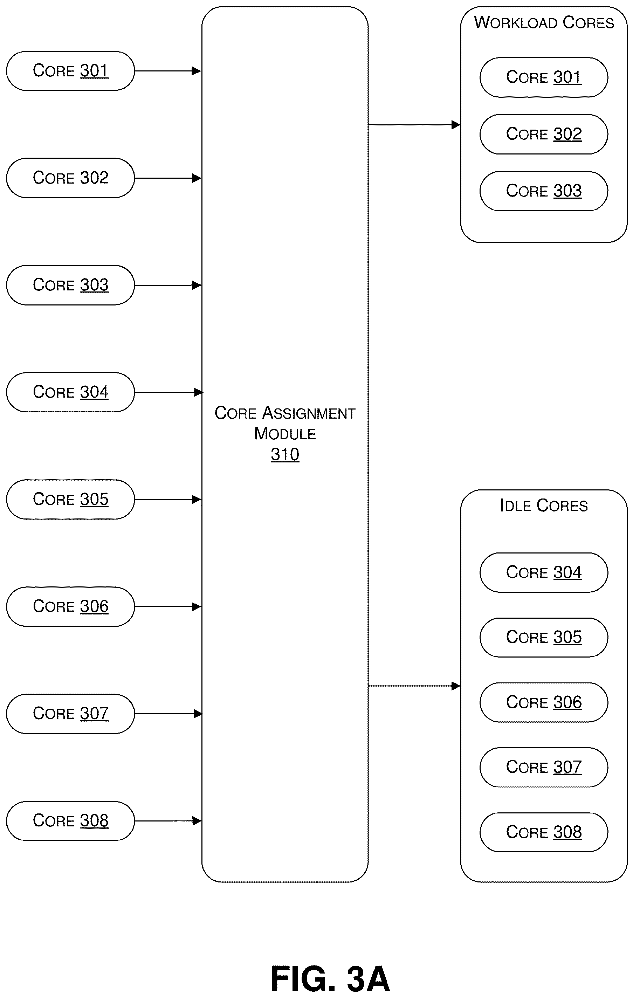

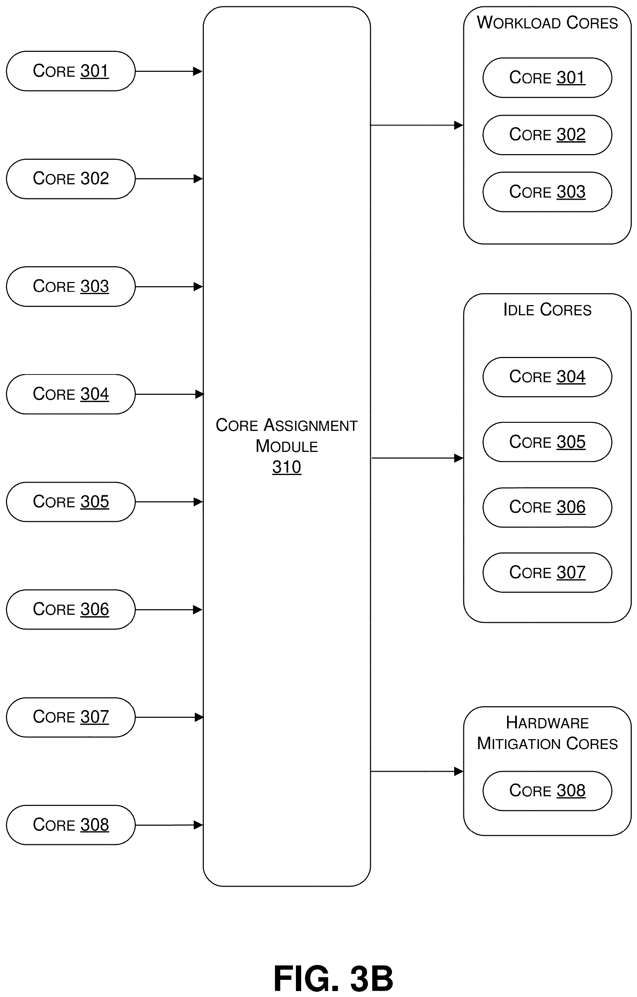

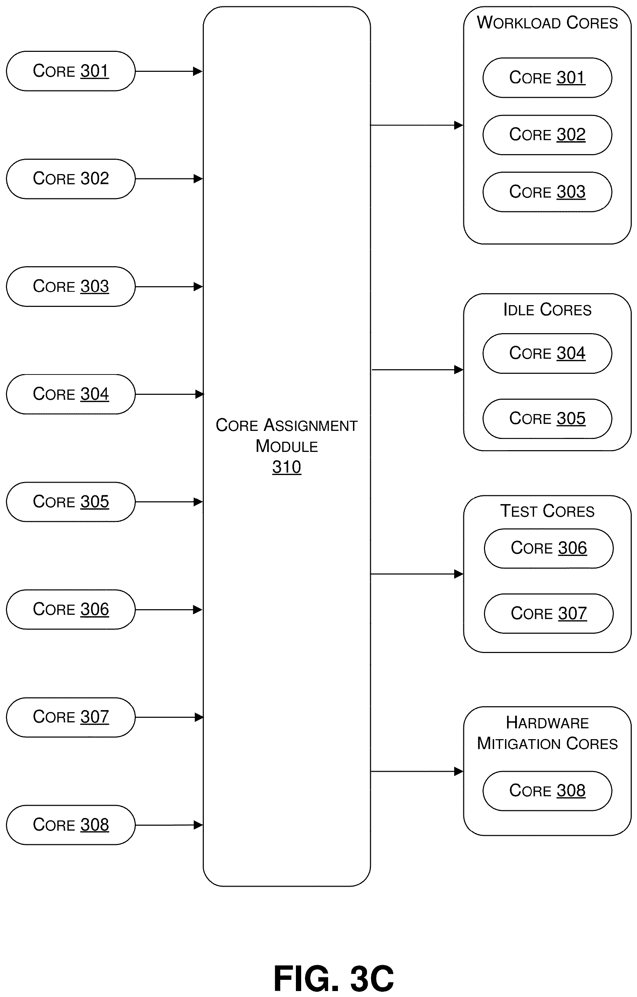

FIGS. 3A, 3B, and 3C illustrate examples how cores can be assigned to perform various functions. Assume a CPU has eight cores, core 301, core 302, core 303, core 304, core 305, core 306, core 307, and core 308. Each core has its own local hardware resources such as a CU, ALU, L1 cache, and L2 cache. Each of the cores can also access resources shared with the other cores, such as an L3 cache, snoop filter, PMUs, memory, I/O devices, etc.

A core assignment module 310 can assign the individual cores for different tasks. For instance, the core assignment module can perform runtime scheduling of cores or static configuration of cores to specific tasks. In FIG. 3A, core 301, core 302, and core 303 are assigned as workload cores to implement workloads for various tenants. Core 304, core 305, core 306, core 307, and core 308 are assigned as idle cores that are not running any workloads or other software. These cores can be placed in low-power states where instructions are not executed, local caches, ALUs, and/or CUs are powered down, etc.

Next, as shown in FIG. 3B, the core assignment module 310 selects core 308 as a hardware mitigation core. At this point, the core 308 can be placed into a higher-power state and begin executing a hardware mitigation algorithm. Note that this does not necessarily involve booting a hypervisor, operating system, or higher-level application on core 308, and in some cases none of these programs run on the hardware mitigation core(s). As described more below, core 308 can monitor shared hardware resources to detect fault criteria. When the fault criteria are met, core 308 can take a hardware mitigation action.

Next, as shown in FIG. 3C, the core assignment module 310 selects two additional cores - core 306 and core 307 - as test cores. As described more below, the test cores can be responsible for intentionally forcing specific hardware faults to occur. This allows for validation of the hardware mitigation algorithm running on core 308, ideally before the hardware faults impact any of the cores assigned to workloads.

### EXAMPLE HARDWARE MITIGATION ACTION

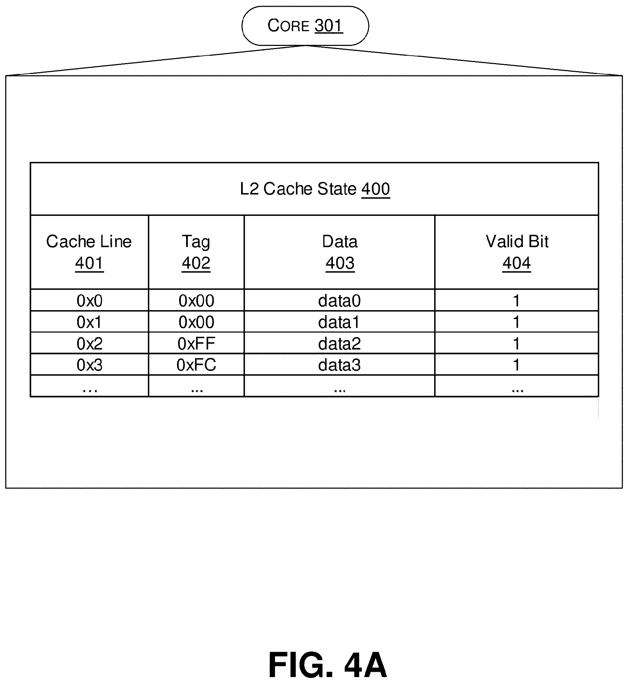

FIG. 4A illustrates an L2 cache state 400 for core 301. In this example, the L2 cache is relatively simple - a direct-mapped 16-bit cache with a capacity of 256 bytes. Furthermore, for the purposes of discussion, the cache can be mapped to a 16-bit memory that is byte-addressable and includes 64k bytes of memory. Thus, a 16-bit value can uniquely identify a physical address of a byte of data in memory. Note that the L2 cache is shown in this relatively simple 16-bit, direct-mapped configuration because it will be easier to explain certain concepts. As already discussed, however, in practice, the L2 caches may have a much different configuration, e.g., different number of bits (32, 64, etc.), set-associative or fully-associative, more data capacity, etc.

As shown in FIG. 4A, the L2 cache can have 16 cache lines 401 numbered 0x0 through 0xF (hexadecimal notation) or 0 through 15 (decimal notation). Each one of cache lines 401 can have an 8-bit tag 402, and can store 16 bytes of data 403. Tag 402 can include the eight high-order bits of the physical memory address stored therein. Thus, if any of physical memory addresses 0x0000 through 0x00FF are stored in a given cache line 401, tag 402 will have a value of 0x00. Similarly, if any of memory addresses 0xFF00 through 0xFFFF are stored in a given cache line 401, tag 402 will have a value of 0xFF for that cache line.

As mentioned above, data 403 can include 16 bytes of data that correspond to a physical memory address. Generally speaking, the 16 bytes can be consecutive memory addresses. Each physical address in memory can be mapped to a particular cache line by the second-lowest order nibble (one nibble = four bits) of the physical address. Thus, for a two-byte (16-bit = 4 nibble) address 0xWXYZ, the third nibble "Y" can determine which cache line the physical address is mapped to. Each physical memory address can thus map to one of the 16 cache lines 401, depending on the value of this nibble. For the purposes of this document, the group of memory addresses that collectively map to a common cache line will be referred to as a "set" of addresses. Thus, memory addresses with a "Y" nibble of 0x0 are included in a first set of addresses that are always stored in the first cache line (0x0), memory addresses with a "Y" nibble of 0x1 are included in a second set of addresses that are always stored in the second cache line (0x1), and so on. In the example of FIG. 4A with 16 cache lines, the memory includes a total of 16 sets of addresses.

Furthermore, each time a given physical memory address is loaded into an L2 cache, 16 consecutive bytes at that physical memory address can be stored in data 403. For example, when a physical address of 0x0000 is accessed by core 301, the 16 bytes of data at addresses 0x0000 through 0x000F can be loaded into data 403 at cache line 0x0. As another example, for an access to a physical address of 0xFFF0, the 16 bytes of data at addresses 0xFFF0 through 0xFFFF can be loaded into data 403 at cache line 0xF.

The L2 cache state 400 can also include a valid bit 404. The valid bit indicates whether the data in that cache line is valid. For instance, if one core modifies data at a given memory address, the cache control unit 234 can set the valid bit to 0 for any other local or shared cache that also includes that memory address. When the valid bit is set to zero for a given cache line in a given core, that core will not use the data in the cache. Instead, that core will attempt to retrieve the data from a higher level cache and/or main memory.

Note that FIG. 4A illustrates a simplified example and that additional fields can be included that are not shown in FIG. 4A. For instance, if data 403 is modified but not written to memory, this means that there can be different values for a given cache line than is present in memory. In such implementations, the cache line can use a dirty bit (not shown) that can be set to "1" when data is written to a given cache line, and can set back to "0" when that cache line is written to memory and/or data from memory is read into that ache line. Those skilled in the art will understand that different computing architectures may use different cache writing policies, and some of these implementations will not necessarily include a dirty bit. For example, in some implementations, a cache can be a "write-through" cache where, when data is written to the cache, the data is also synchronously written to memory.

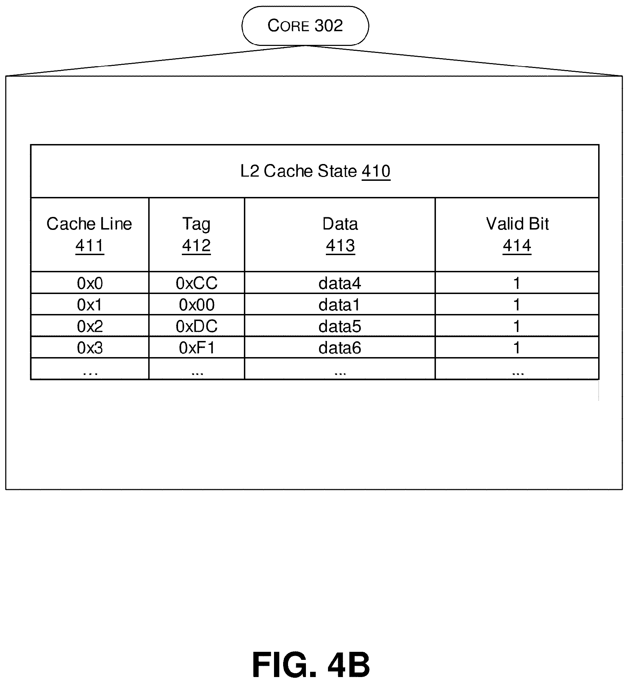

FIG. 4B illustrates an L2 cache state 410 for core 302. Here, L2 cache state 410 includes a cache line 411, a tag 412, data 413, and valid bit 414. Each of these entries can be implemented as described previously for the corresponding entry in L2 cache state 400. For instance, cache line 411 can be implemented as described above for cache line 401, tag 412 can be implemented as described above for tag 402, data 413 can be implemented as described above for data 403, and valid bit 414 can be implemented as described above for valid bit 404.

As shown in FIGS. 4A and 4B, the respective L2 caches for core 301 and core 302 have different addresses loaded into the cache with the exception of cache line 0x1. Both caches have address 0x0010 through 0x001F in this cache line.

Next, assume that core 308 proceeds by querying the snoop filter 236. The snoop filter could have entries indicating various states for different entries. The entries can indicate when a given address is exclusively held in the cache on only one core, has been modified in the cache of one or more cores, is shared among the caches of multiple cores, etc. For example, the snoop filter could indicate that each of the memory addresses in the cache lines 0x0, 0x2, and 0x3 is in an exclusive state, since these addresses are not shared in the L2 cache of core 301 and core 302 (assuming they are not present elsewhere in the L2 cache of the remaining cores). The snoop filter could indicate that the addresses in cache line 0x1 are in a shared state, however, since both core 301 and core 302 have the same address stored in the cache. The snoop filter might also maintain a presence field indicating which L2 caches have that address stored therein. Assuming only core 301 and core 302 share the addresses 0x0010 through 0x001F, then the presence field could be a bit string such as 11000000. Here, the first two "1" bits indicate this address range is present in the L2 caches on core 301 and core 302, while the remaining six "0" bits indicate that address range is not present in the L2 caches on core 303, core 304, core 305, core 306, core 307, and core 308.

For each address that is in the shared state, the hardware mitigation algorithm on core 308 can check the L3 cache to indicate whether that address is stored in the L3 cache. If so, then core 308 can take no additional action. However, assume that the fault criteria indicate that any address in the shared state (e.g., present in two or more L2 caches) must also be in the L3 cache, or else there is a fault. Further, assume that addresses 0x0010 through 0x001F are absent from the L3 cache. At this point, the hardware mitigation algorithm on core 308 can take a hardware mitigation action to correct the fault.

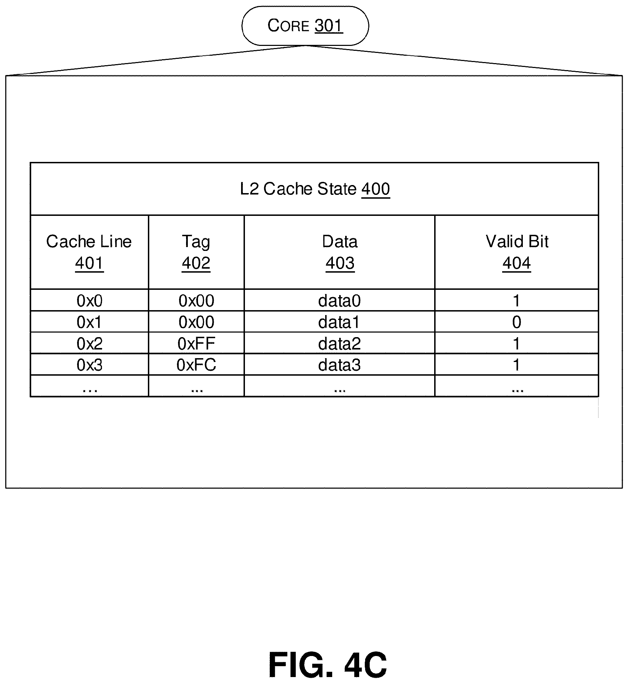

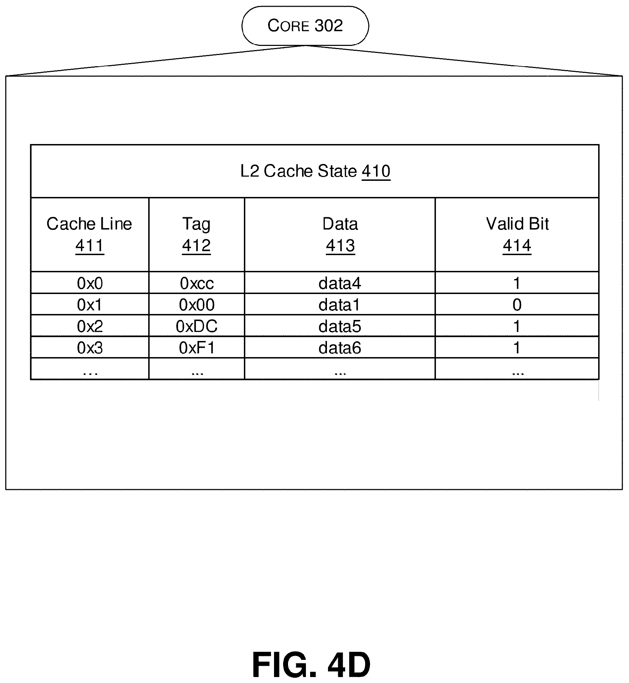

For instance, the hardware mitigation algorithm can involve core 308 executing one or more instructions. For instance, the instructions can cause the cache control unit to set the valid bits to "0" in any L2 cache storing the address that is in the shared state. FIGS. 4C and 4D illustrate the result, with the valid bit having been set to "0" for cache line 0x1 in core 301 and core 302. The instructions can also cause any modified data to be written back to main memory, e.g., using memory controller 240. Then, the instructions can cause that address to be read back from memory and prefetched into the L3 cache. Thus, when either core 301 or 302 next attempts to access the data stored in cache line 0x1, those cores will detect the invalid state of that cache line. Then, the cores will retrieve the data from the L3 cache and reset the valid bit to "1".

As another point, refer back to FIG. 3C, where core 306 and core 307 are designated as test cores. Consider a scenario where a cloud services provider would like to deploy a hardware mitigation algorithm on core 308. However, the cloud services provider does not necessarily want to wait for a hardware fault to actually occur on an actual tenant workload before validating the algorithm. Thus, core 306 and core 307 can be programmed with code to intentionally create the faulty hardware state. For instance, core 306 and core 307 can be programmed to bring data into the same cache line in the L2 cache, and then evict that address from the L3 cache. This will cause core 308 to detect and resolve the problem without impacting any of the cores assigned to tenant workloads.

### FURTHER IMPLEMENTATIONS

In the example set forth above, the hardware mitigation algorithm executing on core 308 detected the hardware state of hardware resources used by other cores - specifically, the L2 caches on core 301 and core 302. Note, however, that core 308 did not need to directly access the L2 caches themselves, and thus was not able to view any private data in the respective L2 caches. Rather, core 308 was able to detect the hardware fault by accessing shared hardware resources that convey information about the state of the L2 caches. Specifically, these shared resources include the L3 cache 232 and the snoop filter 236.

In addition, note that core 308 was able to take a hardware mitigation action to clear the faulty hardware state, again without actually accessing either of the L2 caches. Rather, core 308 was able to execute one or more instructions that caused other shared resources, such as the cache coherency unit 234 and the memory controller 240, to clear the faulty hardware state. Note also that the hardware mitigation action did not reveal any private data in the L2 caches on core 301 and core 302.

More generally, the disclosed implementations relate to mitigating hardware faults using spare cores that are not necessarily running workloads. The L3 cache and snoop filter 236 are merely examples of shared resources that can be used to detect faulty hardware states. Likewise, the cache coherency unit 234 and the memory controller 240 are merely examples of hardware resources that can be used to implement hardware mitigation actions.

For example, hardware mitigation actions taken by a spare core can be used to clear fault states on a range of other local hardware resources, such as L1 cache, that are not directly accessible to the spare core. Furthermore, hardware mitigation actions can also be taken by the spare core to clear fault states on other hardware resources shared by multiple cores, such as main memory, L3 cache, storage devices, network controllers, thermal devices (e.g., fans), I/O devices, etc.

For instance, consider a network controller that exhibits a buffer overrun whenever it is heavily utilized for streaming services by multiple cores. The network controller might have a register that core 308 could read to detect that the buffer is getting full. At this point, core 308 could set a value in a shared register that is accessible to core 301 and core 302. Then, the hypervisor and/or operating systems on core 301 and core 302 could read that register value and throttle network operations to avoid overrunning the buffer. In this case, the hardware resource experiencing the fault is a shared resource, as is the register that is used to clear the fault. However, again, core 308 cannot read private data on core 301 and core 302.

As another example, consider a hardware or firmware issue that causes a particular storage block on a solid-state storage device to exhibit slow read and/or write behavior. Further, assume that read and write operations to that storage block is still logically correct, e.g., data is written and read accurately from that storage block, just with higher latency than other storage blocks. In addition, assume that the latency is not sufficiently high that the firmware on the solid-state storage device remaps data to a different block.

Now, consider a case where the workloads on core 301 and core 302 are very latency sensitive. For instance, the workload on core 301 could be a stock trading algorithm that must quickly execute stock trades. The workload on core 302 could be an online gaming application that needs to render high-resolution video and audio while being immediately responsible to streaming gaming inputs from many different video game players concurrently. In this case, the hardware mitigation algorithm could be configured to communicate (e.g., via a shared register) with the hypervisors and/or operating systems on cores 301 and 302 not to use that specific storage block on the solid-state storage device. Other cores running less-latency sensitive workloads could still use that storage block.

As another example, consider a employing a machine learning model for hardware mitigation. For example, a classifier or regression model could be trained using input features representing hardware state. Then, specific hardware failures could be employed as labels by the machine learning model to learn weights that encode one or more fault criteria. For instance, in the implementations above, the machine learning model could be trained by labeling any instance where retrieval of data from L2 cache exceeds a specified latency as a fault. Then, the machine learning model could learn weights to encode knowledge that data in L2 cache with a shared state that is not also in L3 cache represents a fault. As but two examples, a fully-connected neural network and/or support vector machine could be employed in this regard.

In further implementations, a reinforcement learning approach could be employed to train a machine learning model to learn specific hardware mitigation actions. For example, instead of hard-coding a rule that specific actions are taken when a hardware fault is detected, a contextual bandit could be provided that has the ability to take a wide range of actions. The contextual bandit could learn according to a reward function (e.g., high reward for low latency) that actions such as invalidating shared L2 cache lines and reading data back into L3 cache can improve latency in a context where the data is in a shared state but not in the L3 cache.

### EXAMPLE SYSTEM

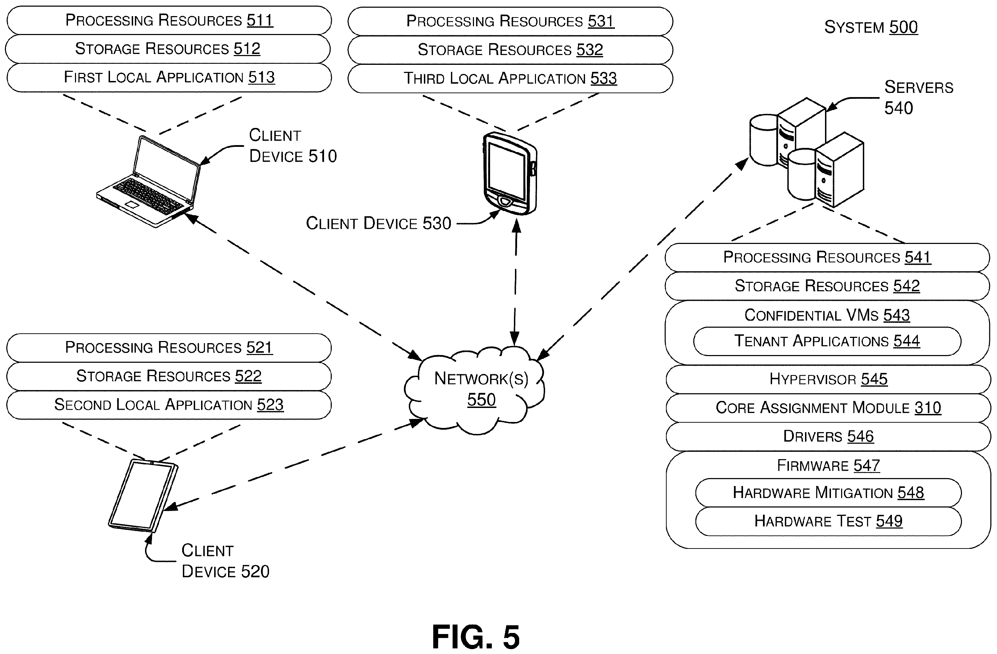

The present implementations can be performed in various scenarios on various devices. FIG. 5 shows an example system 500 in which the present implementations can be employed, as discussed more below.

As shown in FIG. 5, system 500 includes a client device 510, a client device 520, a client device 530, and servers 540, connected by one or more network(s) 550. Note that the client devices can be embodied as mobile devices such as smart phones or tablets, as well as stationary devices such as desktops, etc. Likewise, the servers can be implemented using various types of computing devices. In some cases, any of the devices shown in FIG. 5, but particularly the servers, can be implemented in data centers, server farms, etc.

Client device 510 can have processing resources 511 and storage resources 512, client device 520 can have processing resources 521 and storage resources 522, client device 530 can have processing resources 531 and storage resources 532, and servers 540 can have processing resources 541 and storage resources 542. Each of these devices may also have various modules that function using the processing and storage resources to perform the techniques discussed herein. The storage resources can include both persistent storage resources, such as magnetic or solid-state drives, and volatile storage, such as one or more random-access memory devices. In some cases, the modules are provided as executable instructions that are stored on persistent storage devices, loaded into the random-access memory devices, and read from the random-access memory by the processing resources for execution.

Client device 510 can include a first local application 513, client device 520 can include a second local application 523, and client device 530 can include a third local application 533. Servers 540 can implement confidential compute environment 100 shown in FIG. 1. For instance, servers 540 can include confidential virtual machines 543, executing tenant applications 544, hypervisor 545, core assignment module 310, drivers 546, and firmware 547, which can function as described above with respect to FIG. 1. Processing resources 541 can include one or more host CPUs according to CPU architecture 200.

Core assignment module 310 can assign individual cores to run workloads. The core assignment module can also assign individual cores to run hardware mitigation 548 and hardware testing 549, which can be implemented in firmware 547. The firmware can be implemented as low-level device code that is stored in a read-only memory (ROM), electrically erasable programmable ROM (EEPROM), on flash memory, etc.

In some cases, the core assignment module 310 runs on the same physical device as the cores that execute the workloads and firmware. In other cases, the core assignment module runs on a different device. Also, note that the core assignment module can perform static assignment of cores to implement hardware mitigation and/or hardware testing. Alternatively, the core assignment module can perform dynamic runtime scheduling of these functions to different cores.

Each of the local applications on the respective client devices can correspond to a particular tenant application executing in a respective confidential virtual machine on server 540. The respective client devices can send sensitive data to the server 540 for processing in encrypted form, e.g., using end-to-end encryption over network(s) 550 via a protocol such as Secure Sockets Layer (SSL) or Transport Layer Security (TLS). The server 540 can process the tenant data in encrypted form at all times except for within a respective secure enclave in a corresponding virtual machine.

### EXAMPLE METHOD FOR WRITE OPERATION

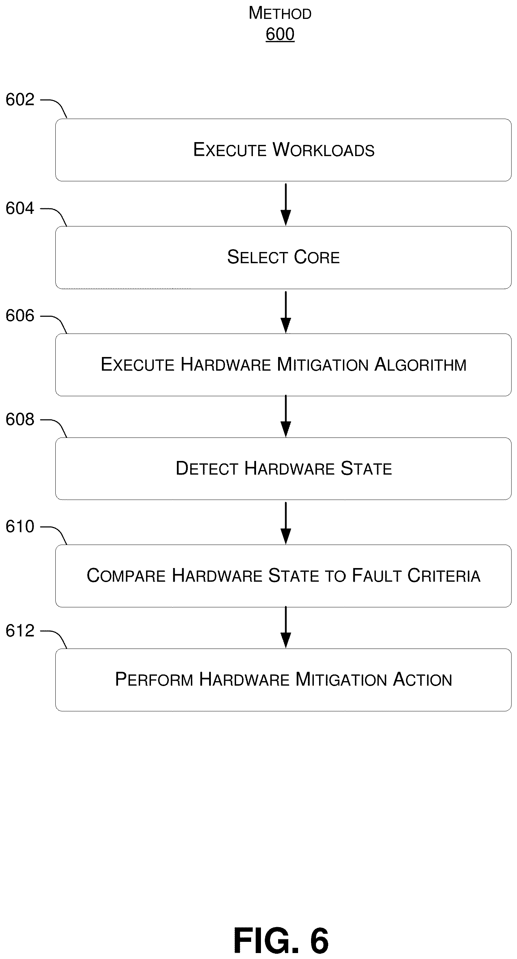

FIG. 6 illustrates an example computer-implemented method 600, consistent with some implementations of the present concepts.

Method 600 begins at block 602, where workloads are executed on a first processing core of a system and a second processing core of a system. For instance, the workloads can be more of hypervisors, operating systems, or tenant applications. In some cases, the workloads are executed in a confidential compute environment that protects private data of the tenant applications.

Method 600 continues at block 604, where a third processing core is selected to run a hardware mitigation algorithm. For instance, the third processing core can be a spare core that is not running another workload. In some cases, the hardware mitigation algorithm can be implemented in firmware, e.g., using low-level code that does not involve booting a hypervisor or operating system on the third processing core.

Method 600 continues at block 606, where the hardware mitigation algorithm is executed on the third processing core. For instance, the hardware mitigation algorithm can run periodically, e.g., at specified intervals (e.g., once per second) on the third processing core.

The hardware mitigation algorithm can involve block 608, where a hardware state is detected by the third processing core. For instance, the hardware state can relate to shared resources accessible to all of the cores, and/or to local resources on the first processing core and the second processing core. In some cases, shared hardware resources can reveal limited information about the hardware state of local hardware resources, e.g., a snoop filter can reveal information about the L2 cache on the first processing core and the second processing core without revealing private tenant data stored therein.

The hardware mitigation algorithm can involve block 610, where the hardware state is compared to one or more fault criteria. For instance, the one or more fault criteria can indicate when a hardware fault is present on a given hardware resource. A fault is detected when the hardware state matches the one or more fault criteria.

The hardware mitigation algorithm can involve block 612, where a hardware mitigation action is performed by the third processing core. For instance, the hardware mitigation action can involve causing a shared hardware resource to change a state of one or more other hardware resources that are experiencing a fault. For instance, as noted above, a cache coherency unit and/or memory controller can change the state of an L2 cache experiencing a fault.

### EXAMPLE GRAPHICAL INTERFACE

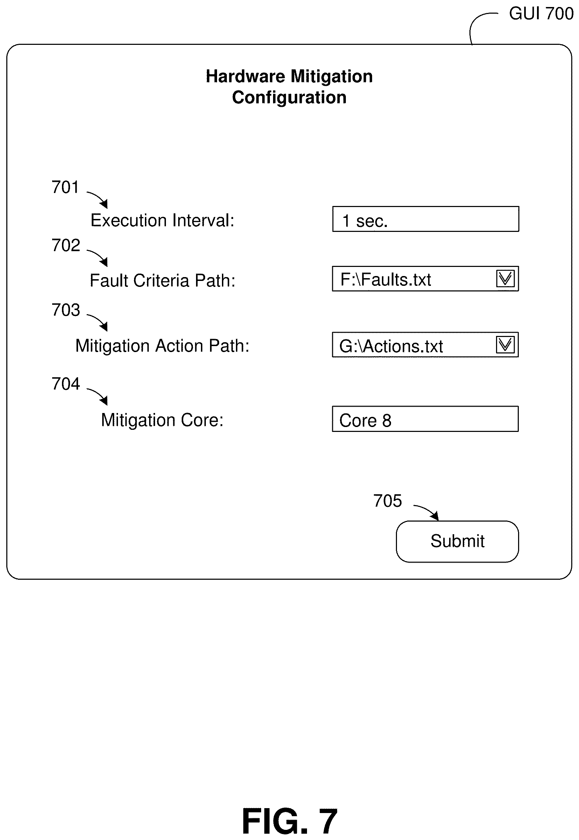

FIG. 7 illustrates an example configuration graphical user interface ("GUI") 700 that can be presented to configure how hardware mitigation is implemented. The configuration graphical user interface can include user-selectable elements for configuring various aspects of the disclosed concepts. For example, execution interval element 701 provides options for selecting an execution interval at which the hardware mitigation algorithms runs, e.g., polls for hardware state. Here, the user has elected to execute the algorithm every second, but other options can be provided such as every 100 milliseconds, every 10 seconds, every minute, etc.

Fault criteria path element 702 can identify a path to a data file that identifies one or more fault criteria. For instance, firmware implementing the hardware mitigation algorithm can read and parse the file identified by this element. The firmware can extract specific criteria to detect hardware faults. For example, the Faults.txt file could identify two criteria - an L2 cache line is in a shared state, and that cache line is not present in the L3 cache.

Mitigation action path 703 can identify a path to a data file that identifies one or more mitigation actions. For instance, the mitigation actions for the L2 caching example set forth above could be identified by the Actions.txt file. These actions can include invalidating the L2 caches on the cores that have the shared cache line, writing the data back to memory, and/or prefetching the data into the L3 cache. In some implementations, the firmware can have one or more logical statements that select specific instructions to execute based on the values in the Actions.txt file.

Mitigation core element 704 can specify a particular core for the mitigation algorithm to run on. When a user presses submit element 705, this can cause the core assignment module 310 to assign the identified core to perform the hardware mitigation algorithm. This can also cause that core to be configured according to the execution interval, fault criteria, and/or mitigation actions identified by the other elements of GUI 700. The use of a GUI to control the configuration of the hardware mitigation in this manner can allow a user, such as a system administrator, to flexibly change how hardware mitigation is performed as new problems are identified, different devices are added or removed from the system, etc.

### TECHNICAL EFFECT

As noted above, it is inevitable that hardware faults will sometimes arise after widespread deployment of a given hardware resource. Under these circumstances, it can be quite expensive to replace or repair the hardware. Furthermore, replacing or repairing hardware can render computing services unavailable for extended periods of time.

In some cases, it is possible to implement software or firmware mitigation to clear or at least partially mitigate hardware faults. For instance, as noted above, in some cases it is possible to take an action that causes one hardware resource to clear a fault state on another hardware resource. However, it is not always feasible to execute hardware mitigation algorithms on processing cores that are affected by a given hardware fault. For instance, as noted above, confidential computing environments can require that tenant data remains private, and this requirement could be violated if a hardware mitigation algorithm were run on a processing core concurrently with a tenant workload.

The disclosed implementations can utilize a spare core that is not running another workload to implement a hardware mitigation algorithm in software or firmware. This is possible because there are circumstances where one core can detect hardware faults that affect other cores. This is even true when the hardware experiencing the fault, such as the L2 cache on core 301 and core 302, is not directly accessible to the spare core running the hardware mitigation algorithm. By leveraging other shared resources that give the spare core visibility into the hardware state of those local resources, the spare core can detect the hardware faults. The spare core can also utilize other shared resources that can clear the fault, again without necessarily directly accessing the hardware resources that are experiencing the fault.

### DEVICE IMPLEMENTATIONS

The examples and figures introduced above show various types of communication devices. As also noted, not all device implementations can be illustrated, and other device implementations should be apparent to the skilled artisan from the description above and below. The term "device", "computer," "computing device," "client device," "communication device," and/or "server device" as used herein can mean any type of device that has some amount of hardware processing capability and/or hardware storage/memory capability. Processing capability can be provided by one or more hardware processors (e.g., hardware processing units/cores) that can execute computer-readable instructions to provide functionality. Computer-readable instructions and/or data can be stored on storage, such as storage/memory and or the datastore and, when executed, can cause a processor to perform acts. The term "system" as used herein can refer to a single device, multiple devices, etc.

Storage resources can be internal or external to the respective devices with which they are associated. The storage resources can include any one or more of volatile or non-volatile memory, hard drives, solid state drives, flash storage devices, and/or optical storage devices (e.g., CDs, DVDs, etc.), among others. As used herein, the terms "computer-readable media" and "computer-readable medium" can include signals. In contrast, the terms "computer-readable storage media" and "computer-readable storage medium" excludes signal. Computer-readable storage media includes "computer-readable storage devices." Examples of computer-readable storage devices include volatile storage media, such as RAM, and non-volatile storage media, such as hard drives, optical discs, solid state drives, NVMe hard disk drives, flash memory, etc.

In some cases, the devices are configured with a general-purpose hardware processor and storage resources. Processors and storage can be implemented as separate components or integrated together as in computational RAM. In other cases, a device can include a system on a chip (SOC) type design. In SOC design implementations, functionality provided by the device can be integrated on a single SOC or multiple coupled SOCs. One or more associated processors can be configured to coordinate with shared resources, such as memory, storage, etc., and/or one or more dedicated resources, such as hardware blocks configured to perform certain specific functionality. Thus, the term "processor," "hardware processor" or "hardware processing unit" as used herein can also refer to central processing units (CPUs), graphical processing units (GPUs), neural processing units (NPUs), controllers, microcontrollers, processor cores, or other types of processing devices suitable for implementation both in conventional computing architectures as well as SOC designs.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

In some configurations, any of the modules/code discussed herein can be implemented in software, hardware, and/or firmware. In any case, the modules/code can be provided during manufacture of the device or by an intermediary that prepares the device for sale to the end user. In other instances, the end user may install these modules/code later, such as by downloading executable code and installing the executable code on the corresponding device.

Also note that devices generally can have input and/or output functionality. For example, computing devices can have various input mechanisms such as keyboards, mice, touchpads, voice recognition, gesture recognition (e.g., using depth cameras such as stereoscopic or time-of-flight camera systems, infrared camera systems, RGB camera systems or using accelerometers/gyroscopes, facial recognition, etc.), microphones, etc. Devices can also have various output mechanisms such as printers, monitors, speakers, etc.

Also note that the devices described herein can function in a stand-alone or cooperative manner to implement the described techniques. For example, the methods and functionality described herein can be performed on a single computing device and/or distributed across multiple computing devices that communicate over network(s) 550. Without limitation, network(s) 550 can include one or more local area networks (LANs), wide area networks (WANs), the Internet, and the like.

### ADDITIONAL EXAMPLES

Various examples are described above. Additional examples are described below. One example includes a method comprising executing workloads on processing cores of a system, the workloads including a first workload that executes on a first processing core of the system and a second workload that executes on a second processing core of the system, selecting a third processing core of the system that is available to run a hardware mitigation algorithm, executing the hardware mitigation algorithm on the third processing core, the hardware mitigation algorithm comprising, detecting a hardware state of one or more hardware resources utilized by the first processing core and the second processing core, comparing the detected hardware state to one or more fault criteria for initiating a hardware mitigation action, and when the detected hardware state matches the one or more fault criteria, performing the hardware mitigation action by the third processing core, where the hardware mitigation action changes state of the one or more hardware resources.

Another example can include any of the above and/or below examples where the executing the workloads includes executing one or more of hypervisors, operating systems, or tenant applications on the first processing core and the second processing core.

Another example can include any of the above and/or below examples where the selecting the third processing core involves determining that none of a hypervisor, an operating system, or a tenant application is executing on the third processing core.

Another example can include any of the above and/or below examples where the hardware mitigation algorithm is executed in firmware on the third processing core.

Another example can include any of the above and/or below examples where the firmware is stored in at least one of a read-only memory (ROM), electrically erasable programmable ROM (EEPROM), or flash memory.

Another example can include any of the above and/or below examples where the third processing core cannot access data of the first workload and cannot access data of the second workload.

Another example can include any of the above and/or below examples where the one or more hardware resources comprise one or more hardware caches.

Another example can include any of the above and/or below examples where the one or more hardware caches include a first local cache on the first core and a second local cache on the second core.

Another example can include any of the above and/or below examples where detecting the hardware state comprises querying a snoop filter.

Another example can include any of the above and/or below examples where the one or more fault criteria involve a particular cache line being in a shared state in the local cache on the first core and the local cache on the second core.

Another example can include any of the above and/or below examples where the one or more fault criteria involve the particular cache line being absent from a shared cache.

Another example can include any of the above and/or below examples where the shared cache is an L3 cache, the first local cache is an L2 cache on the first core and the second local cache is an L2 cache on the second core.

Another example includes a system comprising multiple processing cores, storage having instructions, and hardware resources shared by the multiple processing cores where the instructions, when executed by respective processing cores, cause the system to execute workloads on two or more processing cores of the system, the workloads including a first workload that executes on a first processing core of the system and a second workload that executes on a second processing core of the system and execute a hardware mitigation algorithm on an available third processing core, the hardware mitigation algorithm comprising detecting a hardware state of one or more individual hardware resources utilized by the first processing core and the second processing core, comparing the detected hardware state to one or more fault criteria for initiating a hardware mitigation action, and when the detected hardware state matches the one or more fault criteria, performing the hardware mitigation action by the third processing core, where the hardware mitigation action changes state of the one or more individual hardware resources.

Another example can include any of the above and/or below examples where the one or more individual hardware resources utilized by the first processing core and the second processing core are local hardware resources that are not accessible to the third processing core.

Another example can include any of the above and/or below examples where the hardware mitigation action controls one or more shared hardware resources that are accessible to the first processing core, the second processing core, and the third processing core.

Another example can include any of the above and/or below examples where the one or more hardware resources utilized by the first processing core and the second processing core comprise one or more shared hardware resources that are also utilized by the third processing core.

Another example can include any of the above and/or below examples where the hardware mitigation action controls the one or more shared hardware resources that experience the fault.

Another example can include any of the above and/or below examples where the workloads include confidential cloud computing workloads that process private data of respective cloud tenants.

Another example can include any of the above and/or below examples where the third processing core does not execute a tenant application while performing the hardware mitigation algorithm.

Another example includes a computer-readable storage medium storing instructions which, when executed by a processing device, cause the processing device to perform acts comprising executing workloads on processing cores of a system, the workloads including a first workload that executes on a first processing core of the system and a second workload that executes on a second processing core of the system and executing a hardware mitigation algorithm on a third processing core, the hardware mitigation algorithm comprising detecting a hardware state of one or more hardware resources utilized by the first processing core and the second processing core, comparing the detected hardware state to one or more fault criteria for initiating a hardware mitigation action, and when the detected hardware state matches the one or more fault criteria, performing the hardware mitigation action by the third processing core, where the hardware mitigation action changes state of the one or more hardware resources.

Another example relates to utilizing spare cores to mitigate hardware failures on a computing device. For instance, in some cases, tenant workloads can have sensitive data that executes on a given core of a device. In some cases, a hardware fault in the system may occur that affects the core running the tenant workload, and there may be an action that can be taken in mitigation software or firmware to fix that hardware fault. However, because of the sensitivity of the data on the core experiencing the fault, it is not always possible to run the mitigation algorithms on the core that is affected by the fault. The disclosed implementations can utilize a spare core to execute a hardware mitigation algorithm on another core that can clear the fault, without accessing any sensitive data on the core that is affected by the fault.

### CONCLUSION

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and other features and acts that would be recognized by one skilled in the art are intended to be within the scope of the claims.

## Claims

1. A method comprising:
executing workloads on processing cores of a system, the workloads including a first workload that executes on a first processing core of the system and a second workload that executes on a second processing core of the system;
selecting a third processing core of the system that is available to run a hardware mitigation algorithm;
executing the hardware mitigation algorithm on the third processing core, the hardware mitigation algorithm comprising:
detecting a hardware state of one or more hardware resources utilized by the first processing core and the second processing core;
comparing the detected hardware state to one or more fault criteria for initiating a hardware mitigation action; and
when the detected hardware state matches the one or more fault criteria, performing the hardware mitigation action by the third processing core,
wherein the hardware mitigation action changes state of the one or more hardware resources.

2. The method of claim 1, wherein the executing the workloads includes executing one or more of hypervisors, operating systems, or tenant applications on the first processing core and the second processing core.

3. The method of claim 2, wherein the selecting the third processing core involves determining that none of a hypervisor, an operating system, or a tenant application is executing on the third processing core.

4. The method of claim 3, wherein the hardware mitigation algorithm is executed in firmware on the third processing core.

5. The method of claim 4, wherein the firmware is stored in at least one of a read-only memory (ROM), electrically erasable programmable ROM (EEPROM), or flash memory.

6. The method of any of claims 1-5, wherein the third processing core cannot access data of the first workload and cannot access data of the second workload.

7. The method of any of claims 1-6, wherein the one or more hardware resources comprise one or more hardware caches.

8. The method of claim 7, wherein the one or more hardware caches include a first local cache on the first core and a second local cache on the second core.

9. The method of claim 8, wherein detecting the hardware state comprises querying a snoop filter.

10. The method of claim 9, wherein the one or more fault criteria involve a particular cache line being in a shared state in the local cache on the first core and the local cache on the second core.

11. The method of claim 10, wherein the one or more fault criteria involve the particular cache line being absent from a shared cache.

12. The method of claim 10, the shared cache being an L3 cache, the first local cache being an L2 cache on the first core and the second local cache being an L2 cache on the second core.

13. A system comprising:
multiple processing cores;
storage having instructions; and
hardware resources shared by the multiple processing cores,
wherein the instructions, when executed by respective processing cores, cause the system to perform the method of any of claims 1-12.

14. A computer-readable storage medium storing instructions which, when executed by a processing device, cause the processing device to perform the method of any of claims 1-12.
